# FASCICULE DE BREVET EUROPEEN

(11) **EP 3 225 434 B1**
(45) Date de publication et mention de la délivrance du brevet: **08.05.2019**
(21) Numéro de dépôt: 17162111.3
(22) Date de dépôt: 21.03.2017
(51) Int. Cl.: B60F 1/04, B60G 17/005, B60G 11/14, B60G 17/027, B60G 11/00

(54) **DISPOSITIF DE SUSPENSION POUR VEHICULE FERROVIAIRE OU RAIL-ROUTE**
AUFHÄNGEVORRICHTUNG FÜR SCHIENENFAHRZEUG ODER ZWEIWEGEFAHRZEUG
SUSPENSION DEVICE FOR RAILWAY OR RAIL-ROAD VEHICLE

(30) Priorité: 29.03.2016 FR 1652668
(43) Date de publication de la demande: 04.10.2017
(73) Titulaire: UNAC, 30310 Vergeze (FR)
(72) Inventeur: LACROIX, Jerôme, 34020 CALVISSON (FR); FERREIRA, Tony, 30920 CODOGNAN (FR); CALAMIA, Julien, 30670 AIGUES-VIVES (FR)
(74) Mandataire: IPAZ

(56) Documents cités:
- CN-U- 202 242 834
- GB-A- 2 070 531
- GB-A- 2 324 777
- JP-A- 2007 045 219
- US-A- 3 338 184
- US-A1- 2005 029 064

## Description

La présente invention concerne un dispositif de suspension pour véhicule ferroviaire ou véhicule rail-route. Elle concerne également un essieu ferroviaire, et un véhicule ferroviaire ou rail-route comprenant un tel dispositif de suspension.

Le domaine de l'invention est le domaine des dispositifs de suspension pour véhicules ferroviaires ou véhicules rail-route, tels que des véhicules industriels rail-route de type pelle rail-route, débroussailleuse rail-route, etc.

### Etat de la technique

On connait des véhicules industriels ferroviaires, ou des véhicules industriels rail-route, conçus pour circuler sur une voie ferrée en vue par exemple d'accomplir divers travaux de voieries sur, ou en périphérie, de la voie ferrée, par exemple pour débroussailler avec une débroussailleuse ou intervenir en profondeur avec une pelleteuse.

Ces véhicules sont amenés à circuler sur une voie ferrée et à réaliser des travaux ou à transporter des charges pendant qu'ils se trouvent sur la voie ferrée.

On connait du document GB 2 324 777 A un dispositif de suspension selon le préambule de la revendication 1, pour ce type de véhicule.

Il est cependant nécessaire d'équiper ces véhicules de dispositifs de suspension adéquats permettant à ces véhicules de circuler sur la voie ferrée, tout en assurant une suspension adaptée aux différentes situations dans lesquelles le véhicule peut se trouver, pendant une circulation à vide sur la voie ferrée, pendant la réalisation de travaux alors que le véhicule se trouve à l'arrêt, ou pendant la réalisation de travaux alors que le véhicule se déplace sur la voie ferrée. Ces situations nécessitent une suspension différente du véhicule pour à la fois éviter un déraillement du véhicule tout en assurant un amortissement efficace.

Or, il n'existe aujourd'hui aucun dispositif de suspension pour véhicule ferroviaire ou véhicule rail-route, répondant à ce besoin.

Un but de la présente invention est de pallier ces inconvénients.

Un autre but de l'invention est de proposer un dispositif de suspension, pour véhicule ferroviaire ou rail route, assurant un meilleur amortissement dudit véhicule tout en diminuant les risques d'accidents, de dégradation du véhicule ou de déraillement dudit véhicule.

### Exposé de l'invention

L'invention permet d'atteindre au moins l'un de ces buts par un dispositif de suspension pour véhicule ferroviaire, véhicule ou rail-route, comprenant :
- une chambre,
- un piston, dit principal, prévu pour être fixé à un essieu ferroviaire dudit véhicule et libre en translation,
- un piston, dit de blocage, libre en translation dans ladite chambre, et
- un moyen d'amortissement, en particulier élastiquement déformable, disposé entre ledit piston principal et ledit piston de blocage ;
ledit dispositif comprenant en outre un moyen de blocage ou non dudit piston de blocage, en au moins une position dans ladite chambre, de sorte à modifier, et en particulier diminuer, la course disponible pour ledit piston principal.

Ainsi, le dispositif de suspension selon l'invention permet dans un premier mode de fonctionnement, dit « mode d'oscillation libre » dans la suite, dans lequel le piston de blocage n'est pas bloqué, de réaliser un amortissement sur une plus grande course et avec plus de liberté. Dans un deuxième mode de fonctionnement, dit « mode standard » dans la suite, le dispositif de suspension selon l'invention permet de réaliser une suspension plus ferme car la course du piston principal est diminuée par le piston de blocage.

Par conséquent, le dispositif de suspension selon l'invention permet d'adapter la suspension réalisée en fonction des besoins, et en particulier en fonction des différentes situations lesquelles le véhicule ferroviaire peut se trouver, à savoir en circulation libre sur la voie ferrée, en cours de travaux à l'arrêt ou en mouvement, etc. Les risques d'accidents, de déraillement et de dégradation du véhicule, mais aussi les risques de dégradation du dispositif de suspension selon l'invention, sont ainsi diminués.

Selon l'invention, le piston principal est formé par :
- un piston, dit suiveur, prévu pour être fixé à un essieu dudit véhicule ; et
- un piston, dit intermédiaire, disposé entre ledit piston suiveur et le piston de blocage, de sorte que le moyen d'amortissement se trouve entre ledit piston intermédiaire et le piston de blocage ;
lesdits pistons suiveur et intermédiaire étant distincts l'un de l'autre, et le dispositif selon l'invention comprend en outre un moyen élastiquement déformable disposé entre lesdits pistons suiveur et intermédiaire.

En particulier, le piston intermédiaire peut être cantonné à la chambre du dispositif de suspension selon l'invention, de sorte qu'il ne sort jamais de ladite chambre.

Selon cette architecture du piston principal, les pistons suiveur et intermédiaire sont distincts et peuvent se trouver à distance l'un de l'autre.

En effet, lorsque le déplacement vertical d'une roue est supérieur à la course totale offerte par la chambre du dispositif selon l'invention, le piston suiveur, repoussé par le moyen élastiquement déformable, peut se trouver à distance du piston intermédiaire. Dans cette situation, le piston suiveur se trouve dans une course, dite négative.

Cette fonctionnalité du dispositif selon l'invention permet de garder le piston suiveur toujours en contact avec l'essieu et d'éviter les chocs entre l'essieu et le piston suiveur.

Avantageusement, l'interface de contact entre le piston suiveur et le piston intermédiaire peut être plus grande que l'interface de contact entre le piston suiveur et l'essieu. Ainsi, les chocs provenant de la roue et de l'essieu peuvent être réparties sur une plus grande surface, ce qui permet de diminuer les risques de dégradation du piston suiveur, et donc du piston principal.

Avantageusement, le moyen élastiquement déformable disposé entre le piston suiveur et le piston intermédiaire peut comprendre un ressort disposé entre ledit piston suiveur et ledit piston intermédiaire.

En particulier, la raideur de ce ressort peut préférentiellement être inférieure à la raideur du moyen d'amortissement de sorte que les pistons intermédiaire et suiveur entrent en contact avant que le moyen d'amortissement réalise un amortissement.

Dans une version, le piston de blocage peut être agencé dans la chambre de manière étanche.

Dans ce cas, le moyen de blocage en position peut avantageusement comprendre un clapet anti-retour configuré pour injecter un fluide, dans la chambre, entre le piston de blocage et une extrémité fermée de ladite chambre se trouvant du côté dudit piston de blocage, repoussant ainsi ledit piston de blocage en une position de blocage se trouvant à distance de ladite extrémité.

Ainsi, le blocage du piston de blocage est réalisé par gavage d'une partie de la chambre se trouvant à l'opposé du piston principal par rapport au piston de blocage.

Un tel moyen de blocage peut être mis en oeuvre de manière simple et contrôlé de manière simple et à la volée, par exemple par une commande hydraulique du clapet anti-retour.

De plus, un tel moyen de blocage hydraulique est plus robuste dans le temps qu'une pièce de blocage mécanique.

Dans une version avantageuse du dispositif selon l'invention, la chambre peut comprendre un épaulement naturel, entre le piston de blocage et le piston principal, en particulier entre le piston de blocage et le piston intermédiaire, et contre lequel le piston de blocage vient en contact dans la position de blocage.

Un tel épaulement naturel permet de figer le piston de blocage en position blocage et d'assurer un amortissement efficace et précis en mode standard.

Avantageusement, le moyen d'amortissement peut comprendre des rondelles ressort, telles que des rondelles Belleville.

Ainsi, il est possible d'adapter la raideur de l'amortissement en ajoutant ou en supprimant des rondelles.

Suivant un exemple de réalisation non limitatif, assurant un meilleur amortissement, le moyen d'amortissement peut comprendre plusieurs groupes comprenant chacun plusieurs rondelles ressort, telles que des rondelles Belleville, montées dans le même sens au sein d'un même groupe, lesdits groupes étant orientés de sorte que les rondelles d'un groupe sont montées tête-bêche par rapport aux rondelles d'un groupe adjacent.

Suivant un autre aspect de l'invention, il est proposé un essieu ferroviaire, pour véhicule ferroviaire ou rail-route, équipé d'au moins un dispositif de suspension selon l'invention.

L'essieu selon l'invention peut comprendre deux dispositifs de suspension selon l'invention, positionné chacun à une extrémité dudit essieu.

Suivant encore un autre aspect de l'invention, il est proposé un véhicule ferroviaire, ou rail-route, comprenant :
- au moins un dispositif de suspension selon l'invention, ou
- au moins un essieu ferroviaire selon l'invention.

En particulier, le véhicule selon l'invention peut comprendre un essieu ferroviaire avant, équipé de deux dispositifs de suspension selon l'invention.

Le véhicule selon l'invention peut en outre comprendre un moyen de commande, en particulier hydraulique, du blocage ou non du piston de blocage d'au moins un dispositif de suspension, et en particulier de deux dispositifs de suspension d'un même essieu ferroviaire, et encore plus particulièrement d'un essieu ferroviaire avant.

Le véhicule selon l'invention peut en particulier être un véhicule de travaux rail-route équipé d'une pelle, d'une débroussailleuse ou d'une nacelle.

Plus particulièrement, le véhicule selon l'invention peut être une pelle rail-route.

Le véhicule selon l'invention peut comprendre plusieurs, en particulier deux, essieux ferroviaires, pour circuler sur une voie ferrée.

Au moins un, en particulier chaque, essieu ferroviaire peut être déplaçable entre une position rétractée dans laquelle il n'est pas utilisé et une position déployée dans laquelle il est utilisé pour rouler sur une voie ferrée.

Le véhicule selon l'invention peut en outre comporter plusieurs, en particulier deux, essieux comportant des roues pneumatiques pour circuler sur route, lorsque les essieux ferroviaires ne sont pas utilisés.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1a-1d sont des représentations schématiques d'un exemple de réalisation non limitatif d'un dispositif de suspension selon l'invention dans différentes configurations ; et
- la FIGURE 2 est une représentation schématique d'un exemple de réalisation non limitatif d'un essieu ferroviaire selon l'invention ; et
- la FIGURE 3 est une représentation schématique d'un exemple de réalisation non limitatif d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

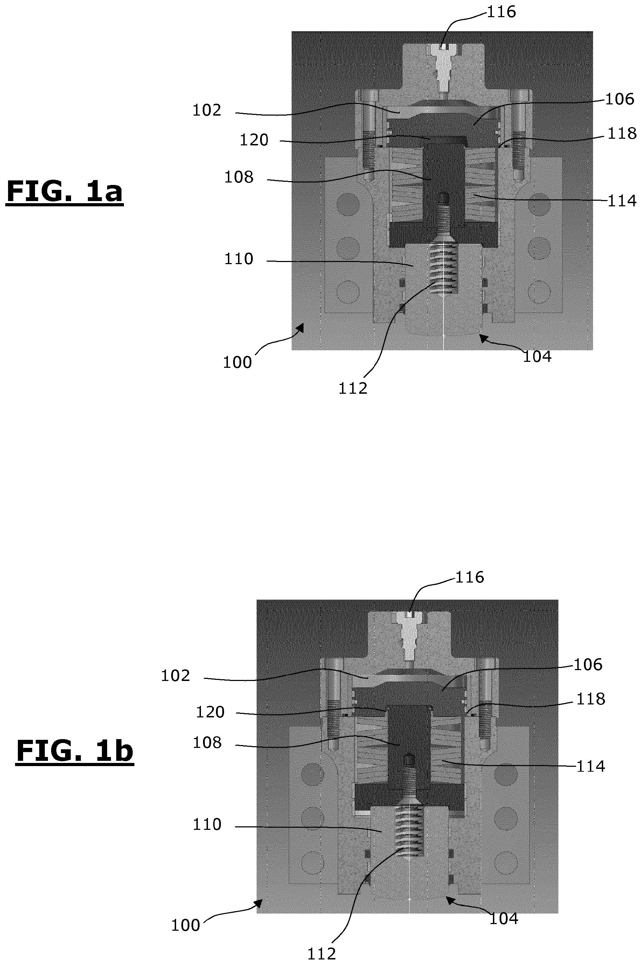

Les FIGURES 1a-1d sont des représentations schématiques d'un exemple de réalisation non limitatif d'un dispositif de suspension selon l'invention dans différentes configurations.

Le dispositif de suspension 100, représenté sur les FIGURES 1a-1d, comprend une chambre 102 étanche, un piston principal 104 prévu pour être fixé à un essieu ferroviaire et un piston de blocage 106.

Le piston principal 104 est formé par deux pistons distincts, à savoir un piston intermédiaire 108 du côté du piston de blocage 106 et un piston suiveur 110 prévu pour être fixé à l'essieu. Un ressort 112 est positionné entre les pistons intermédiaire 108 et suiveur 110.

Le piston intermédiaire 108 est lui-même formé par deux pièces fixées entre-elles de manière solidaire par une vis.

Le dispositif de suspension 100 comprend en outre un moyen d'amortissement formé par quatre groupes de rondelles Belleville 114. Les rondelles 114 de chaque groupe sont montées dans le même sens au sein dudit groupe. De plus, les groupes de rondelles sont orientés de sorte que les rondelles d'un groupe sont montées tête-bêche par rapport aux rondelles d'un groupe adjacent.

Le dispositif de suspension 100 comprend un injecteur de fluide associé à un clapet anti-retour 116 pour injecter un fluide dans la chambre 102, du côté opposé au piston principal 104 par rapport au piston de blocage. Le fluide injecté repousse le piston de blocage 106, vers le piston principal 104, en particulier vers le piston intermédiaire 108, jusqu'à ce que le piston de blocage vienne en butée contre un épaulement naturel 118 prévu dans la chambre 102.

Les FIGURE 1a et 1b représentent le piston de blocage 106 dans la position de blocage. Dans cette position, l'amortissement est assuré par les rondelles Belleville 114.

Lorsqu'aucun effort de compression n'est appliqué au piston principal 104, les rondelles 114 ne sont pas comprimées, telles que représentées sur la FIGURE 1a. Lorsqu'un effort de compression est appliqué au piston principal 104, les rondelles 114 sont comprimées, telles que représentées sur la FIGURE 1b. Dans ce cas, le piston principal 104 se rapproche du piston de blocage 106, qui est bloqué en position. Une partie du piston intermédiaire 108 peut venir se loger dans une ouverture 120 prévue sur le piston de blocage 106, en regard du piston intermédiaire 108.

Dans les configurations représentées sur les FIGURES la et 1b, le dispositif de suspension 100 est dans un mode de fonctionnement standard.

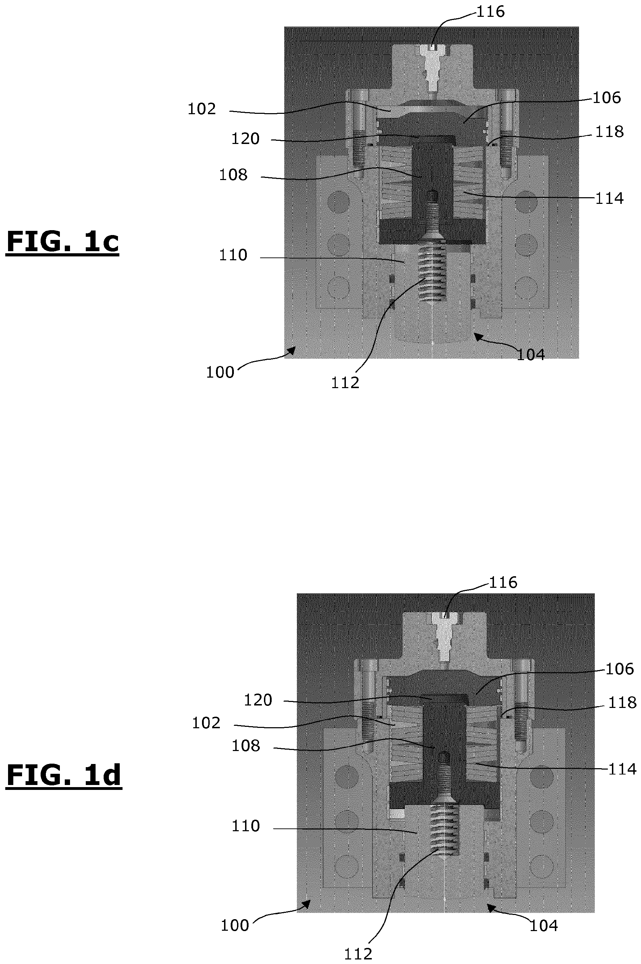

Lorsque le déplacement vertical de la roue à laquelle est associé le dispositif de suspension 100 est supérieure à la course totale du piston intermédiaire 108 dans la chambre 102, alors le piston suiveur 110 est repoussée à distance du piston intermédiaire 108 par le ressort 112, de sorte à garder la roue en contact avec le rail et ainsi d'éviter un déraillement du véhicule. Cette configuration est représentée à la FIGURE 1c. Dans cette configuration, le piston suiveur 112 présente une course négative.

Lorsque la roue se déplace dans l'autre sens, le piston suiveur 110 revient au contact du piston intermédiaire 108 par compression du ressort 112, qui présente une raideur inférieure à celle de l'ensemble des rondelles Belleville 114, et se trouve dans l'une des configurations représentées sur les FIGURES la et 1b.

Le piston de blocage 106 peut être débloqué en chassant le fluide admis dans la chambre 102 par l'injecteur muni de clapet anti-retour 116. Dans ce cas, le piston de blocage 106 est libre en translation, ainsi que les pistons intermédiaire 108 et suiveur 110. La course disponible pour l'ensemble formé par les pistons 106-110 est alors plus grande que celle disponible dans le mode de fonctionnement standard représenté sur les FIGURES 1a-1c. Le dispositif 100 est alors dans un mode de fonctionnement en oscillation libre.

La FIGURE 1d donne une représentation d'un exemple de configuration du dispositif 100 dans le mode de fonctionnement en oscillation libre, dans laquelle le piston de blocage se trouve plaquée contre le fond de la chambre 102.

Bien entendu, dans le mode de fonctionnement en oscillation libre dans lequel la position du piston de blocage 106 n'est pas bloquée, il est possible de se trouver dans :
- une configuration dans laquelle les rondelles Belleville sont compressées, telle que représentée sur la FIGURE 1b, et
- une configuration dans laquelle le piston suiveur 110 présente une course négative, telle que représentée sur la FIGURE 1c.

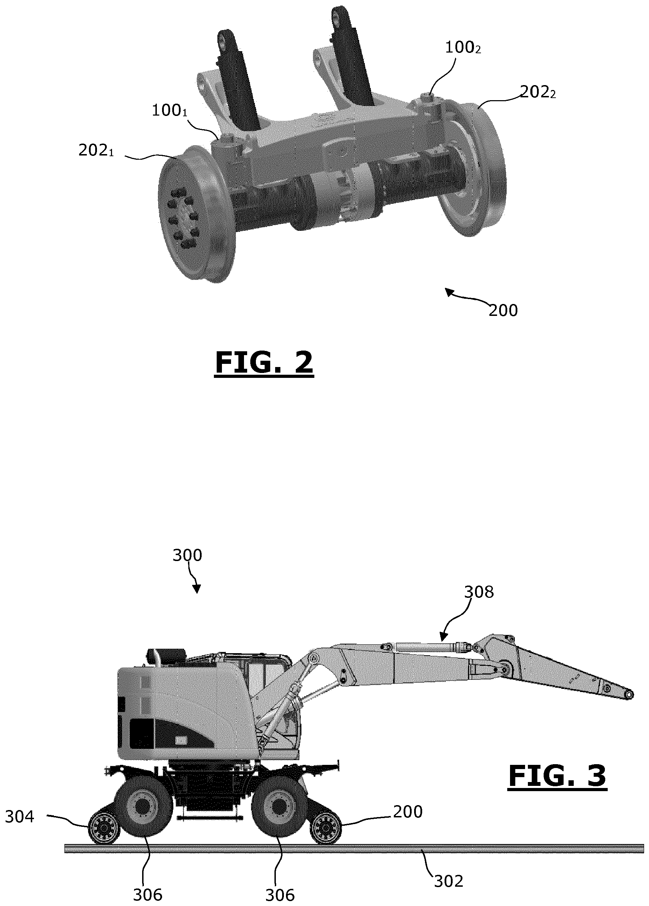

La FIGURE 2 est une représentation schématique d'un exemple de réalisation non limitatif d'un essieu ferroviaire selon l'invention.

L'essieu ferroviaire 200, représenté sur la FIGURE 2, comprend deux roues métalliques 202₁ et 202₂.

L'essieu 200 comprend en outre du côté de chaque roue 202₁ et 202₂, un dispositif de suspensions selon l'invention, respectivement 100₁ et 100₂.

Chaque dispositif de suspension 100₁ et 100₂ peut être identique au dispositif de suspension 100 des FIGURES 1a-1d.

L'essieu ferroviaire 200 peut être l'essieu ferroviaire avant d'un véhicule de travaux rail-route.

La FIGURE 3 est une représentation schématique d'un exemple de réalisation non limitatif d'un véhicule ferroviaire selon l'invention.

Le véhicule 300, représenté sur la FIGURE 3, est un véhicule rail-route pour réaliser des travaux de voiries sur, ou en périphérie, d'une voie ferrée 302.

Le véhicule 300 comporte un essieu ferroviaire avant 200 selon l'invention, tel que par exemple l'essieu 200 de la FIGURE 2.

Le véhicule 300 comporte en outre un essieu ferroviaire arrière 304.

Chaque essieu ferroviaire 200 et 304 peut être déplaçable entre une position rétractée dans laquelle il n'est pas utilisé et une position déployée dans laquelle il est utilisé par le véhicule pour rouler sur la ferrée 302.

Le véhicule 300 comporte en outre deux essieux comportant des roues pneumatiques 306 pour circuler sur la route, lorsque les essieux ferroviaires 200 et 304 se trouvent en position rétractée et ne sont pas utilisés.

Le véhicule 300 comporte un bras mécanique 308 pouvant être muni d'un outil de travail, tel qu'une pelle, une tondeuse, un nacelle ou débrousailleuse, etc.

Le véhicule 300 comprend en outre un moyen de commande (non représenté), prévu par exemple dans une cabine dudit véhicule, pour bloquer en position, ou débloquer, le piston de blocage de chaque dispositif de suspension de l'essieu avant 200.

Bien entendu, l'invention n'est pas limitée aux exemples détaillés ci-dessus.

## Revendications

1. Dispositif de suspension pour véhicule (300) ferroviaire ou rail-route, comprenant :
- une chambre (102),
- un piston (104), dit principal, prévu pour être fixé à un essieu ferroviaire (200) dudit véhicule (300) et libre en translation,
- un piston (106), dit de blocage, libre en translation dans ladite chambre (102),
- un moyen (114) d'amortissement élastiquement déformable disposé entre ledit piston principal (104) et ledit piston de blocage (106), et
- un moyen (116) de blocage ou non dudit piston de blocage (106) en au moins une position dans ladite chambre (102), de sorte à modifier la course disponible pour ledit piston principal (104) ;
**caractérisé en ce que** le piston principal (104) est formé par :
- un piston (110), dit suiveur, prévu pour être fixé audit essieu ferroviaire, et
- un piston (108), dit intermédiaire, disposé entre ledit piston suiveur (110) et le piston de blocage (106), de sorte que le moyen d'amortissement (114) se trouve entre ledit piston intermédiaire (108) et ledit piston de blocage (106) ;
lesdits pistons suiveur (110) et intermédiaire (108) étant distincts l'un de l'autre, et ledit dispositif comprenant en outre un moyen (112) élastiquement déformable disposé entre lesdits pistons suiveur (110) et intermédiaire (108).

2. Dispositif (100) selon la revendication précédente, **caractérisé en ce que** le moyen élastiquement déformable comprend un ressort (112) disposé entre le piston suiveur (110) et le piston intermédiaire (108).

3. Dispositif (100) selon l'une quelconque des revendications précédentes, **caractérisé en ce que**, le piston de blocage (106) est agencé dans la chambre (102) de manière étanche, et le moyen de blocage en position comprend un clapet anti-retour (116) configuré pour injecter un fluide, dans ladite chambre, entre ledit piston de blocage (106) et une extrémité fermée de ladite chambre (102) se trouvant du côté dudit piston de blocage (106), repoussant ainsi ledit piston de blocage (106) en une position de blocage se trouvant à distance de ladite extrémité.

4. Dispositif (100) selon l'une quelconque des revendications précédentes, **caractérisé en ce que** la chambre (102) comprend un épaulement naturel (118), entre le piston de blocage (106) et le piston principal (104), et contre lequel le piston de blocage (106) vient en contact dans une position de blocage.

5. Dispositif (100) selon l'une quelconque des revendications précédentes, **caractérisé en ce que** le moyen d'amortissement comprend des rondelles ressort (114).

6. Dispositif (100) selon la revendication précédente, **caractérisé en ce que** le moyen d'amortissement comprend plusieurs groupes comprenant chacun plusieurs rondelles ressort (114), montées dans le même sens au sein d'un même groupe, lesdits groupes étant orientés de sorte que les rondelles (114) d'un groupe sont montées tête-bêche par rapport aux rondelles (114) d'un groupe adjacent.

7. Essieu ferroviaire (200), pour véhicule ferroviaire ou rail-route, équipé d'au moins un dispositif (100₁, 100₂) de suspension selon l'une quelconque des revendications précédentes.

8. Véhicule (300) ferroviaire ou rail-route comprenant au moins un dispositif de suspension selon l'une quelconque des revendications 1 à 6, ou au moins un essieu ferroviaire (200) selon la revendication précédente.

9. Véhicule (300) selon la revendication précédente, **caractérisé en ce qu'**il comprend un essieu ferroviaire avant (200), équipé de deux dispositifs de suspension selon l'une quelconque des revendications 1 à 6.

10. Véhicule (300) selon l'une quelconque des revendications 8 ou 9, **caractérisé en ce qu'**il comprend en outre un moyen de commande du blocage ou non du piston de blocage d'au moins un dispositif de suspension.

11. Véhicule (300) selon l'une quelconque des revendications 8 à 10, **caractérisé en ce qu'**il s'agit d'un véhicule de travaux rail-route équipé d'une pelle, d'une débroussailleuse ou d'une nacelle.

## Patentansprüche

1. Aufhängungsvorrichtung für Schienen- oder Zweiwegefahrzeuge (300), enthaltend:
- eine Kammer (102),
- einen Kolben (104), Hauptkolben genannt, der dazu vorgesehen ist, an einer Schienenfahrzeugachse (200) des Fahrzeugs (300) befestigt zu werden und frei verschiebbar ist,
- einen Kolben (106), Sperrkolben genannt, der in der Kammer (102) frei verschiebbar ist,
- eine elastisch verformbare Dämpfungseinrichtung (114), die zwischen dem Hauptkolben (104) und dem Sperrkolben (106) angeordnet ist, und
- eine Einrichtung (116) zum Blockieren bzw. Nicht-Blockieren des Sperrkolbens (106) in mindestens einer Position in der Kammer (102), um den für den Hauptkolben (104) verfügbaren Hub zu verändern;
**dadurch gekennzeichnet, dass** der Hauptkolben (104) gebildet ist aus:
- einem Kolben (110), Nachlaufkolben genannt, der dazu vorgesehen ist, an die Schienenfahrzeugachse befestigt zu werden, und
- einem Kolben (108), Zwischenkolben genannt, der zwischen dem Nachlaufkolben (110) und dem Sperrkolben (106) angeordnet ist, so dass sich die Dämpfungseinrichtung (114) zwischen dem Zwischenkolben (108) und dem Sperrkolben (106) befindet;
wobei der Nachlaufkolben (110) und der Zwischenkolben (108) voneinander getrennt vorliegen und die Vorrichtung ferner eine elastisch verformbare Einrichtung (112) aufweist, die zwischen dem Nachlaufkolben (110) und dem Zwischenkolben (108) angeordnet ist.

2. Vorrichtung (100) nach dem vorangehenden Anspruch,
**dadurch gekennzeichnet, dass**
die elastisch verformbare Einrichtung eine Feder (112) enthält, die zwischen dem Nachlaufkolben (110) und dem Zwischenkolben (108) angeordnet ist.

3. Vorrichtung (100) nach einem der vorangehenden Ansprüche,
**dadurch gekennzeichnet, dass**
der Sperrkolben (106) in der Kammer (102) abgedichtet angeordnet ist und dass die Positionsblockiereinrichtung ein Rückschlagventil (116) enthält, das dazu ausgelegt ist, ein Fluid in die Kammer zwischen dem Sperrkolben (106) und einem geschlossenen Ende der Kammer (102) einzuspritzen, das sich auf der Seite des Sperrkolbens (106) befindet, wodurch somit der Sperrkolben (106) in eine Blockierposition gedrückt wird, die von dem Ende entfernt liegt.

4. Vorrichtung (100) nach einem der vorangehenden Ansprüche,
**dadurch gekennzeichnet, dass**
die Kammer (102) eine natürliche Schulter (118) zwischen dem Sperrkolben (106) und dem Hauptkolben (104) enthält, an welche der Sperrkolben (106) in einer Blockierposition in Kontakt gelangt.

5. Vorrichtung (100) nach einem der vorangehenden Ansprüche,
**dadurch gekennzeichnet, dass**
die Dämpfungseinrichtung Federscheiben (114) enthält.

6. Vorrichtung (100) nach dem vorangehenden Anspruch,
**dadurch gekennzeichnet, dass**
die Dämpfungseinrichtung mehrere Gruppen enthält, die jeweils mehrere Federscheiben (114) enthalten, die innerhalb einer selben Gruppe in der gleichen Richtung gelagert sind, wobei die Gruppen so ausgerichtet sind, dass die Federscheiben (114) einer Gruppe bezüglich der Federscheiben (114) einer angrenzenden Gruppe kopfüber gelagert sind.

7. Schienenfahrzeugachse (200) für Schienen- oder Zweiwegefahrzeuge, die mit zumindest einer Aufhängungsvorrichtung (100₁, 100₂) nach einem der vorangehenden Ansprüche ausgestattet ist.

8. Schienen- oder Zweiwegefahrzeug (300), das zumindest eine Aufhängungsvorrichtung nach einem der Ansprüche 1 bis 6 oder zumindest eine Schienenfahrzeugachse (200) nach dem vorangehenden Anspruch enthält.

9. Fahrzeug (300) nach dem vorangehenden Anspruch,
**dadurch gekennzeichnet, dass**
es eine vordere Schienenfahrzeugachse (200) enthält, die mit zwei Aufhängungsvorrichtungen nach einem der Ansprüche 1 bis 6 ausgestattet ist.

10. Fahrzeug (300) nach einem der Ansprüche 8 oder 9,
**dadurch gekennzeichnet, dass**
es ferner eine Steuereinrichtung zum Blockieren bzw. Nicht-Blockieren des Sperrkolbens zumindest einer Aufhängungsvorrichtung enthält.

11. Fahrzeug (300) nach einem der Ansprüche 8 bis 10,
**dadurch gekennzeichnet, dass**
es sich um ein Zweiwege-Arbeitsfahrzeug handelt, das mit einer Schaufel, einem Freischneider oder einem Förderkorb ausgestattet ist.

## Claims

1. A suspension device for a rail or road-rail vehicle (300), comprising:
- a chamber (102),
- a piston (104), called main piston, provided for fastening to a rail axle (200) of said vehicle (300) and free in translation,
- a piston (106), called blocking piston, free in translation in said chamber (102),
- a resiliently deformable damping means (114) placed between said main piston (104) and said blocking piston (106), and
- a blocking means (116) for blocking or not blocking said blocking piston (106) in at least one position in said chamber (102), so as to modify the stroke available for said main piston (104);
**characterized in that** the main piston (104) is formed by:
- a piston (110), called follower piston, provided so as to be fixed to said rail axle, and
- a piston (108), called intermediate piston, placed between said follower piston (110) and the blocking piston (106), so that the damping means (114) is located between said intermediate piston (108) and said blocking piston (106);
said follower (110) and intermediate (108) pistons being separate from one another, and said device also comprising moreover a resiliently deformable means (112) placed between said follower (110) and intermediate (108) pistons.

2. The device (100) according to the preceding claim, **characterized in that** the resiliently deformable means comprises a spring (112) placed between the follower piston (110) and the intermediate piston (108).

3. The device (100) according to any one of the preceding claims, **characterized in that** the blocking piston (106) is sealingly arranged in the chamber (102), and the means of blocking in position comprises a non-return valve (116) configured to inject a fluid into said chamber, between said blocking piston (106) and a closed end of said chamber (102) located on the side of said blocking piston (106), thus pushing said blocking piston (106) into a blocking position located at a distance from said end.

4. The device (100) according to any one of the preceding claims, **characterized in that** the chamber (102) comprises a natural shoulder (118), between the blocking piston (106) and the main piston (104), against which the blocking piston (106) comes into contact in a blocking position.

5. The device (100) according to any one of the preceding claims, **characterized in that** the damping means comprises spring washers (114).

6. The device (100) according to the preceding claim, **characterized in that** the damping means comprises several groups each comprising several spring washers (114), mounted in the same direction within one and the same group, said groups being oriented so that the washers (114) of one group are mounted head to tail with respect to the washers (114) of an adjacent group.

7. A rail axle (200), for a rail or road-rail vehicle, equipped with at least one suspension device (100₁, 100₂) according to any one of the preceding claims.

8. A rail or road-rail vehicle (300), comprising at least one suspension device according to any one of claims 1 to 6, or at least one rail axle (200) according to the preceding claim.

9. The vehicle (300) according to the preceding claim, **characterized in that** it comprises a front rail axle (200), equipped with two suspension devices according to any one of claims 1 to 6.

10. The vehicle (300) according to either one of claims 8 or 9, **characterized in that** it also comprises a control means of the blocking or not blocking of the blocking piston of at least one suspension device.

11. The vehicle (300) according to any one of claims 8 to 10, **characterized in that** it is a road-rail work vehicle equipped with a shovel, a scrub cutter or an inspection platform.
